**Europäisches Patentamt**

(19) **European Patent Office**

**Office européen des brevets**

(11) Veröffentlichungsnummer: **0 065 761**
**B1**

(12) # EUROPÄISCHE PATENTSCHRIFT

(45) Veröffentlichungstag der Patentschrift:
27.11.85

(21) Anmeldenummer: 82104414.6

(22) Anmeldetag: 19.05.82

(51) Int. Cl.⁴: **H 01 S 3/03**, H 01 S 3/045,
H 01 S 3/097

(54) **Laseranordnung.**

(30) Priorität: 29.05.81 DE 3121372
29.09.81 DE 3138622

(43) Veröffentlichungstag der Anmeldung:
01.12.82 Patentblatt 82/48

(45) Bekanntmachung des Hinweises auf die Patenterteilung:
27.11.85 Patentblatt 85/48

(84) Benannte Vertragsstaaten:
AT BE CH FR GB IT LI NL

(56) Entgegenhaltungen:
DE - A - 2 925 829
US - A - 4 099 143
US - A - 4 242 647

JOURNAL OF PHYSICS E - SCIENTIFIC INSTRUMENTS,
Band 14, Nr. 3, März 1981, DORKING (GB), S. HOWELLS
et al.: "A medium PRF UV preionised TEA CO2 laser",
Seiten 293-294
REVIEW OF SCIENTIFIC INSTRUMENTS, Band 47, Nr. 6,
Juni 1976, NEW YORK (US), R.A. OLSON et al.:
"High-repetition-rate closed-cycle rare gas electrical
discharge laser", Seiten 677-683

(73) Patentinhaber: Battelle-Institut e.V., Am
Römerhof 35 Postfach 900 160,
D-6000 Frankfurt/Main 90 (DE)

(72) Erfinder: Gürs, Karl, Prof.Dr., Weissdornweg 23,
D-6236 Eschborn2 (DE)
Erfinder: Beck, Rasmus, Dr., Nachtigallenstrasse 62,
D-6078 Neu-Isenburg (DE)

(74) Vertreter: Rupprecht, Klaus, Dipl.-Ing., Am Römerhof 35,
D-6000 Frankfurt (Main) 90 (DE)

## Beschreibung

Die Erfindung betrifft eine Laseranordnung, mit einem ein Gasumwalzsystem und Anregungssystem einschliessenden Gehäuse, die nach dem Axialstromprinzip aufgebaut ist. (Eine derartige Laseranordnung ist z.B. aus der DE-A-2 925 829 bekannt.)

Leistung, Verstärkung und Wirkungsgrad der Moleküllaser, insbesondere der $CO_2$-Laser, nehmen mit steigender Temperatur im Lasergas ab. Die Abnahme der Leistungsfähigkeit beruht darauf, dass mit zunehmender Temperatur die Linienbreite grösser wird, die Anregungsenergie sich auf eine zunehmende Zahl von Rotationslinien verteilt, die Zahl der desaktivierenden Stösse zunimmt und die Besetzung des Laserendniveaus durch thermische Anregung zu- und damit die Inversion in den einzelnen Übergängen abnimmt (K. Gürs, Laser 75, Optoelectronics, Conference Proceedings, S. 30–37).

Aus diesem Grund wurden bereits Methoden entwickelt, die Wärme mit dem Lasergas durch Umwälzen und Kühlen des Gases abführen. Geeignete Laser bestehen aus einem aktiven Bereich, in dem das Gas angeregt wird, mit angrenzendem oder integriertem optischen Resonator, aus dem Gasführungssystem mit eingebautem Kühler und einer Pumpe. Da grosse Wärmemengen abzuführen sind, müssen grosse Gasmengen umgepumpt werden. Die entsprechenden Laser sind gross und aufwendig, ihre Einsatzmöglichkeiten begrenzt.

Alle auf dem Markt befindlichen $CO_2$-Laser mit Ausgangsleistungen von mehr als 1 kW arbeiten nach diesem Prinzip des Gastransport- bzw. Konvektionslasers. Es wurde erstmals 1969 von Tiffani, Targ und Foster beschrieben (Appl. Phys. Letters 15, 1969, 91–95).

Ein üblicher Gastransport-Laser verwendet zur schnellen Gasumwälzung ein leistungsstarkes Gebläse, z.B. Ventilator oder Rootspumpe. Je nach Art der Anordnung von Laserresonator und Gasstromrichtung unterscheidet man Querstrom- und Axialstromlaser. Beide haben ihre spezifischen Vor- und Nachteile. Beim Querstromlaser ist der Druckverlust infolge des grossen Strömungsquerschnitts relativ klein. Daher kann die notwendige Strömungsgeschwindigkeit mit einem kleineren Gebläse als beim Axialstromlaser aufrechterhalten werden. Bei diesem Lasertyp ist es jedoch schwieriger, eine homogene Entladung und eine Emission im Grundmode zu erzielen. Aus diesem Grund lässt sich die Emission des Axialstromlasers im allgemeinen besser bündeln.

Konvektionslaser, bei denen der Gasstrom in axialer Richtung durch als Entladungsgefäss dienende Glasröhren geleitet wird, haben auch infolge der radial symmetrischen Gasentladungsbedingungen eine bessere Strahlqualität; ihre Strahlung lässt sich besser fokussieren. Eine ausreichende Strömungsgeschwindigkeit kann jedoch nur mit relativ hohem Druckgefälle über das Laserrohr aufrechterhalten werden. Dadurch sind die Entladungsbedingungen entlang des Rohres nicht einheitlich. Es wird ein starkes und schweres Umwälzgebläse (Rootspumpe) benötigt.

Eine Verbesserung des axialen Konvektionslasers wird in der DE-A-29 16 408 beschrieben. Bei dieser Ausführungsform wird das Gasgemisch in dem Entladungsrohr durch geeignet ausgebildete, wassergekühlte Leitbleche auf einer schraubenförmigen Bahn umgewälzt. Es durchsetzt dabei die aktive Zone des Lasers nur kurz und hat bis zum nächsten Durchlauf genügend Zeit, die aufgenommene Verlustwärme wieder abzugeben. Die schraubenförmigen Leitbleche sind an einer auf einer Linie liegenden Stelle durchbohrt. Durch diese Bohrungen brennt die Gasentladung zur Anregung des Lasergemisches. Diese Anordnung hat den Vorteil, dass nur eine relativ geringe Umwälzgeschwindigkeit benötigt und durch die longitudinale Anordnung des Laserresonators eine gute Modenqualität erreicht wird. Es erweist sich jedoch als schwierig, die Gasladung am Ort zu halten, da sie leicht durch die Gasströmung aus dem Resonatorraum herausgeblasen wird. Günstige Betriebsbedingungen lassen sich nur bei ganz bestimmten Entladungsparametern einhalten, so dass sich die Intensität dieses Lasertyps nicht gut regeln lässt. (Aus der UA-A-4 242 647 ist eine nach dem Axialstromprinzip aufgebaute Laseranordnung bekannt, bei der die Laserkammer als gekühltes Rohr aufgebaut ist.)

Der vorliegenden Erfindung liegt die Aufgabe zugrunde, einen Gastransport- bzw. Konvektionslaser zur Erzeugung von Hochleistungslaserstrahlung zu entwickeln, bei dem die Temperaturerhöhung im Lasergas effektiv unterdrückt und die notwendige Strömungsgeschwindigkeit ohne aufwendige Bauteile aufrechterhalten werden kann.

Es hat sich gezeigt, dass sich diese Aufgabe mit einer Laseranordnung lösen lässt, bei der die Laserkammer als gekühltes Rohr ausgebildet und innerhalb einer Umwälzturbine konzentrisch zu deren Längsachse angeordnet ist. Besondere Ausführungsarten der Erfindung, die einen solchen Axialstromlaser betreffen, sind in den Unteransprüchen 2 bis 13 beschrieben.

Die erfindungsgemäss vorgeschlagenen Laseranordnungen erlauben eine wesentlich grössere Umwälzgeschwindigkeit des Lasergases. Da dementsprechend mehr Wärme mit dem Lasergas abgeführt werden kann, lässt sich die Laserleistung bei gleicher Baugrösse proportional zur Umwälzgeschwindigkeit steigern. Leistungsvolumen und Leistungsgeschwindigkeit werden um den Faktor 3 bis 5 reduziert. In der erfindungsgemässen Anordnung sind z.B. die das Gas bewegenden Bauteile nicht mehr als Pumpe zu identifizieren. Damit wird erstmalig den Erfordernissen des Lasers voll Rechnung getragen und eine moderne Technik eingeführt.

Im folgenden wird die Erfindung anhand von lediglich einen Ausführungsweg darstellenden Zeichnungen näher erläutert. Es zeigen in schematischer Vereinfachung

Fig. 1 im Längsschnitt eine erfindungsgemässe Laseranordnung nach dem Axialstromprinzip;

Fig. 2 eine mögliche Anordnung der Elektroden für den in Fig. 1 gezeigten Laser;

Fig. 3 eine Anordnung, die aus mehreren autonomen Lasersegmenten nach Fig. 1 zusammengesetzt ist;

Fig. 4 eine Möglichkeit zum Antrieb der Umwälzturbinen der in Fig. 3 gezeigten Anordnung;

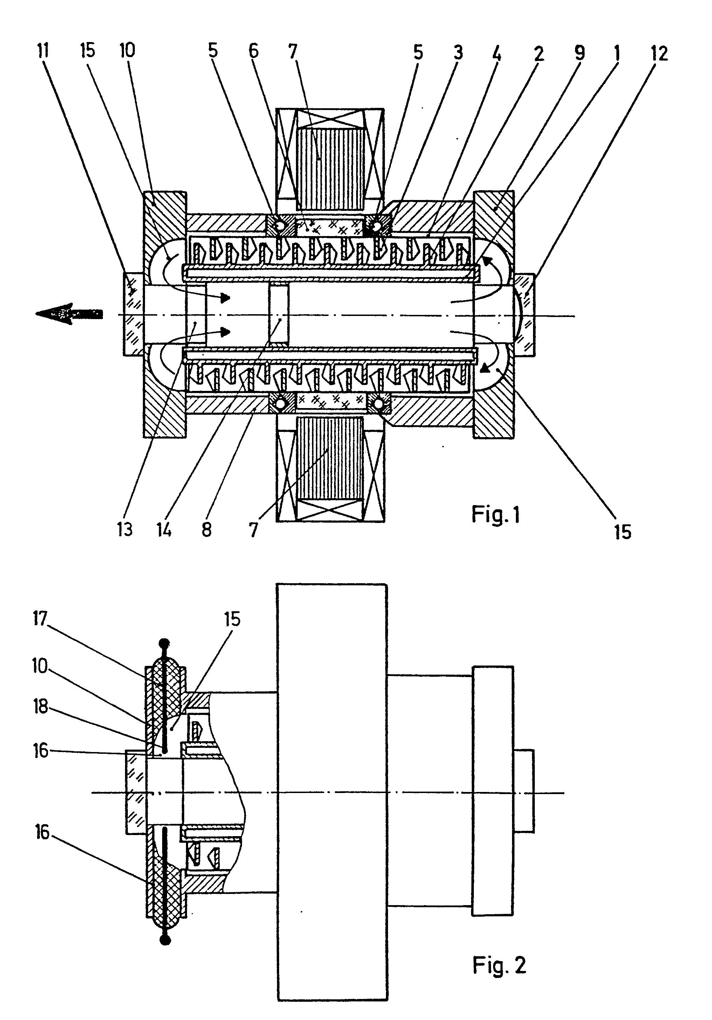

Gemäss Fig. 1 besteht die erfindungsgemässe Laseranordnung aus einem zentralen wassergekühlten Entladungsrohr 1, das koaxial von einem Turbinengebläse umgeben ist. Die Statorschaufeln 2 der Turbine sind fest mit der Aussenwandung des Entladungsrohres 1 verbunden. Dadurch wird eine gute Kühlung erreicht. Die Rotorschaufeln 3 sind in dem Turbinenrohr 4 befestigt, das von aussen in zwei Kugellagern 5 gelagert ist. Zwischen den Lagern 5 ist ein Ringmagnet 6 angeordnet, der vom Drehfeld eines entsprechenden Motorstators 7 mitgenommen wird und so den Turbinenrotor in Bewegung versetzt.

Der Lasergasraum ist abgeschlossen durch ein Gehäuse 8, das im Bereich des Turbinenantriebs dünnwandig ausgelegt ist, damit nur ein kleiner Spalt zwischen Motorstator 7 und Rotor wirksam ist. Das Gehäuse 8 ist fest mit den Endplatten 9 und 10 verbunden. In den Endplatten 9 und 10 sitzen justierbar und abgedichtet die beiden den Laserresonator bildenden Spiegel 11 und 12.

In einer weiteren Ausführungsform des Lasergehäuses kann das Turbinenrohr 4 in das Gehäuse mit einbezogen werden, so dass die Wandung zwischen Rotor und Stator entfallen kann. Das Turbinenrohr 4 wird dann gleichzeitig als Aussenwand des Gasraumes ausgebildet, so dass die Lager und der Rotormagnet im Aussenraum untergebracht werden können. Die Abdichtung des Turbinenrohrs 4 gegen die Endplatten 9 und 10 erfolgt durch eine Gleitdichtung. Eine derartige Gleitdichtung kann vorteilhafterweise mittels einer magnetischen Flüssigkeit, z.B. Öl mit feindispersem magnetisierbarem Material, verwirklicht werden. Dieses Dichtungselement besteht dann aus einem Ringmagnet mit U-Spalt, in dem die magnetische Flüssigkeit festgehalten wird und der sich in den Endplatten befindet. In den Spalt taucht das Ende des Turbinenrohres 4 ohne direkte Berührung ein. Vorteile einer solchen Dichtung sind in geringer Reibung und guter Dichtwirkung bei langer Lebensdauer zu sehen.

Auch ohne Dichtung können das Turbinenrohr und das Statorrohr (Laserrohr) ihre Funktion als Führungssystem für das Lasergas erfüllen, wenn sich auch im Aussenraum Lasergas befindet und nur wenig Austausch mit dem Aussenraum erfolgt. Bei kleinen Spalten kann man daher die Gleitdichtung weglassen. Man muss allerdings ein Aussengehäuse vorsehen, das die Endplatten 9 und 10 verbindet und die Umwälzturbine einschliesst.

Der Gaskreislauf ist durch diese kompakte Anordnung von Laserrohr 4 und Umwälzsystem sehr kurz. Die Wärmeabfuhr aus dem Lasergas erfolgt sehr effektiv in der Umwälzturbine selbst, da die Statorschaufeln 2 direkt gekühlt sind. In den beiden Endstücken 9 und 10 wird der Gasstrom auf kürzestem Wege umgelenkt, so dass praktisch keine nutzlosen Gasführungsstrecken wie bei herkömmlichen Konvektionslasern vorhanden sind.

Die Gasentladung brennt zwischen den Elektroden 13 und 14. Aus Isolationsgründen muss die Innenwand des Entladungsrohres 1 aus Keramik hergestellt werden. An Elektrode 14 wird die Betriebsspannung angelegt. Elektrode 13 liegt auf Erdpotential. Der Abstand zwischen den Elektroden wird im Verhältnis zur Gesamtlänge des Entladungsrohres 1 so ausgelegt, dass einerseits die Brennspannung minimiert wird, andererseits aber eine vollständige Desaktivierung der angeregten Gasmoleküle beim Durchströmen des Driftraumes nach der Anregungszone erfolgt.

Die Umlenkung des Lasergasstroms erfolgt durch Umlenkstrecken 15, die in den Endplatten 9 bzw. 10 eingearbeitet sind. Bei der in Fig. 1 dargestellten Ausführungsform mit den im Entladungsrohr 1 angebrachten Elektroden 13 und 14 sind die Gasumlenkstrecken 15 vorzugsweise so ausgebildet, dass sie die beiden ringförmigen Öffnungen des Turbinenrohres 4 rotationssymmetrisch mit dem zentralen Entladungsrohr 1 verbinden.

Eine weitere Ausführungsform des Lasers betrifft die Anordnung der Gasentladungselektroden bzw. die Modifizierung der Umlenkstrecken, wie es in Fig. 2 schematisch dargestellt ist. Bei dieser Ausführungsform wird die Endplatte 10 auf der Gaseinströmseite des Entladungsrohres in ihrem Umfang mit mehreren Bohrungen 16 versehen. In diese Bohrungen 16 werden mit einem Isolierrohr 17 versehene Stiftelektroden 18 hineingeschoben. Die Umlenkstrecke 15 ist in diesem Bereich so unterteilt, dass das Lasergas in das nun in seiner ganzen Länge als Driftraum wirkende Laserrohr 1 durch mehrere Öffnungen strömen kann. Zwischen jeder Stiftelektrode 18 und den Wänden der Bohrung 16 wird eine Entladung angeregt. Diese Anordnung hat den Vorteil, dass das gesamte Laserrohr aus Metall gefertigt werden kann. Anregungs- und Resonatorraum des Lasers sind streng getrennt und können jeder für sich im Hinblick auf günstige Betriebsparameter optimiert werden.

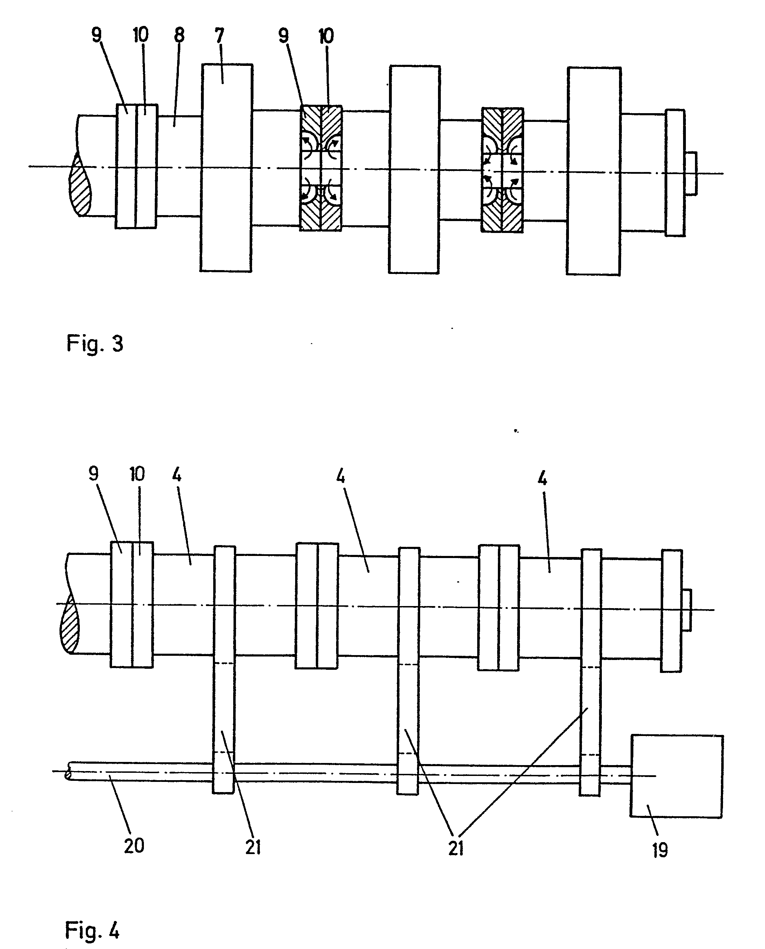

Ein einziges Lasersegment kann bereits wie in Fig. 1 oder 2 dargestellt, als Laser betrieben werden. Die abgegebene Leistung liegt je nach Abmessungen des Segmentes bei 100 bis 500 Watt. Zur Erzielung einer Ausgangsleistung im Kilowatt-Bereich können eine Reihe solcher Segmente, wie in Fig. 3 dargestellt, zu einer Kette vereinigt werden, indem jeweils Saugseiten und Druckseiten zusammengeflanscht werden. Je nach Anzahl und Auslegung der auf diese Weise zusammengesetzten Lasersegmente lassen sich dann Leistungen im Bereich von 1 bis 10 Kilowatt oder darüber erzeugen.

Der Antrieb der einzelnen Turbinenrotoren kann dabei, wie in Fig. 4 gezeigt, durch einen einzigen Motor 19 über eine dem Laser parallel verlaufende Welle 20 erfolgen. Von dieser Welle läuft zu den einzelnen Turbinenrotoren 4 je ein Transmissionsriemen 21.

Das erfindungsgemässe Lasersystem hat beispielsweise eine Länge von 1 m. Die Querschnittsfläche der Entladungskammern beträgt insgesamt 0,05 m². In den Entladungskammern kann die Strömungsgeschwindigkeit bis 160 m/s betragen. Das bedeutet, dass eine Gasmenge von 8 m³/s durch die Entladungskammern fliesst. Ein geeignetes Gasgemisch hat die Zusammensetzung $CO_2:N_2:He = 1:7:3$. Ein günstiger Druckbereich ist 50 bis einige 100 Torr. Unter diesen Bedingungen liefert das System mit 1 m Länge des inneren Gehäuses eine Leistung von 8 kW. Grössere Leistungen können erzielt werden, wenn zwei Reihen von Entladungskammern vorhanden sind oder wenn man die Abmessungen des Systems vergrössert oder mehrere Systeme hintereinander schaltet.

**Patentansprüche**

1. Laseranordnung, aufgebaut nach dem Axialstromprinzip mit einem ein Gasumwälzsystem (4, 5, 6, 7) und Anregungssystem (13, 14) einschliessenden Gehäuse (8, 9, 10), dadurch gekennzeichnet, dass die Laserkammer (1) als gekühltes Rohr ausgebildet und innerhalb einer Umwälzturbine (4) konzentrisch zu deren Längsachse angeordnet ist.

2. Anordnung nach Anspruch 1, dadurch gekennzeichnet, dass die Elektroden (13, 14) in der Laserkammer (1) oder in Gasstromrichtung vor der Laserkammer (1) angebracht sind.

3. Anordnung nach Anspruch 1 oder 2, dadurch gekennzeichnet, dass die Statorschaufeln (2) der Umwälzturbine fest mit der Aussenwand der Laserkammer (1) verbunden sind.

4. Anordnung nach einem der Ansprüche 1 bis 3, dadurch gekennzeichnet, dass die Laserkammer (1) und die Umwälzturbine (4) mit Endplatten (9, 10) abgeschlossen und innerhalb der Endplatten (9, 10) Gasumlenkstrecken (5) vorgesehen sind.

5. Anordnung nach einem der Ansprüche 1 bis 4, dadurch gekennzeichnet, dass zum Antrieb des Turbinenrotors ein Magnet (6), z.B. ein Ringmagnet, vorgesehen ist, der von dem Drehfeld eines Motors mitgenommen wird.

6. Anordnung nach einem der Ansprüche 1 bis 5, dadurch gekennzeichnet, dass der Turbinenrotor innerhalb eines zylindrischen Gehäuses (8) drehbar gelagert ist und das Gehäuse (8) sich zwischen den Endplatten (9, 10) erstreckt.

7. Anordnung nach einem der Ansprüche 1 bis 5, dadurch gekennzeichnet, dass der Turbinenrotor in den Endplatten (9, 10) drehbar gelagert und die Lagerung mit einer Gleitdichtung abgedichtet ist.

8. Anordnung nach Anspruch 7, dadurch gekennzeichnet, dass die Gleitdichtung aus einer magnetischen Flüssigkeit besteht, die in einem Magneten mit U-förmigem Querschnitt eingebracht und von diesem festgehalten wird.

9. Anordnung nach einem der Ansprüche 1 bis 8, dadurch gekennzeichnet, dass die Innenwand der Laserkammer (1) aus einem isolierenden Material besteht und dass die eine Elektrode (13) an der Gaseintrittsseite auf Erdpotential und die andere (14) in einem bestimmten Abstand von der ersten Elektrode auf Betriebspotential gelegt ist.

10. Anordnung nach Anspruch 9, dadurch gekennzeichnet, dass der Abstand der beiden Elektroden (13, 14) im Verhältnis zur Gesamtlänge der Laserkammer (1) so bemessen ist, dass einerseits eine minimale Brennspannung benötigt wird und andererseits das angeregte Gas nach Verlassen der Anregungszone im Strahlungsfeld des Lasers vollständig desaktiviert wird.

11. Anordnung nach einem der Ansprüche 1 bis 8, dadurch gekennzeichnet, dass mehrere auf Betriebspotential gelegte Stiftelektroden (18) am Umfang der Endplatte (10) auf der Gaseintrittsseite in Bohrungen (16) angebracht sind, dass die Umlenkstrecken (15) in die Bohrungen (16) hineinführen und dass das Gas durch die Bohrungen (16) in die Laserkammer (1) einströmt, wobei die Wände der Bohrungen als Masseelektroden dienen.

12. Anordnung nach einem der Ansprüche 1 bis 9, dadurch gekennzeichnet, dass mehrere Laseranordnungen Saug- an Saugseite und Druckan Druckseite zusammengeschaltet sind.

13. Anordnung nach Anspruch 12, dadurch gekennzeichnet, dass der Antrieb von Umwälzturbinen aller Laseranordnungen mittels eines Motors (19) über eine parallel zum Laser verlaufende Welle (20) und einen über den Aussenmantel der jeweiligen Turbine verlaufenden Zahnriemen (21) erfolgt.

**Revendications**

1. Dispositif de laser, monté suivant le principe du courant axial, comportant un carter (8, 9, 10) enfermant un système de circulation de gaz (4, 5, 6, 7) et un système d'excitation (13, 14), caractérisé en ce que la chambre du laser (1) est constituée sous forme d'un tube refroidi et disposée à l'intérieur d'une turbine de circulation (4) concentriquement à son axe longitudinal.

2. Dispositif selon la revendication 1, caractérisé en ce que les électrodes (13, 14) sont disposées dans la chambre du laser (1) ou en avant de la chambre du laser (1) dans le sens du courant de gaz.

3. Dispositif selon la revendication 1 ou 2, caractérisé en ce que les ailettes (2) du stator de la turbine de circulation sont reliées rigidement à la paroi extérieure de la chambre du laser (1).

4. Dispositif selon l'une des revendications 1 à 3, caractérisé en ce que la chambre du laser (1) et la turbine de circulation (4) sont fermées par des plaques d'extrémités (9, 10) et, à l'intérieur des plaques d'extrémités (9, 10), sont prévus des parcours (5) de déviation du gaz.

5. Dispositif selon l'une des revendications 1 à 4, caractérisé en ce que, pour l'entraînement du rotor de la turbine, est prévu un aimant (6), par exemple un aimant torique, qui est entraîné par le champ rotatif d'un moteur.

6. Dispositif selon l'une des revendications 1 à 5, caractérisé en ce que le rotor de la turbine est monté, de façon à pouvoir tourner, à l'intérieur d'un carter (8) cylindrique et le carter (8) s'étend entre les plaques d'extrémités (9, 10).

7. Dispositif selon l'une des revendications 1 à 5, caractérisé en ce que le rotor de la turbine est monté, de façon à pouvoir tourner, dans les plaques d'extrémités (9, 10), et le support de montage est étanché par une garniture d'étanchéité à glissement.

8. Dispositif selon la revendication 7, caractérisé en ce que la garniture d'étanchéité à glissement est constituée par un liquide magnétique, qui est introduit dans un aimant à section transversale en forme de U et est maintenu par celui-ci.

9. Dispositif selon l'une des revendications 1 à 8, caractérisé en ce que le paroi intérieure de la chambre du laser (1) est constituée en un matériau isolant et en ce que l'une des électrodes (13), du côté de l'entrée du gaz, est mise au potentiel de la masse et l'autre (14) est mise au potentiel de service à une distance déterminée de la première électrode.

10. Dispositif selon la revendication 9, caractérisé en ce que la distance entre les deux électrodes (13, 14) est dimensionnée, par rapport à la longueur totale de la chambre du laser (1), de telle manière que, d'une part, une tension de décharge minimale est nécessaire et, que, d'autre part, le gaz excité, après avoir quitté la zone d'excitation, est complètement désactivé dans le champ de rayonnement du laser.

11. Dispositif selon l'une des revendications 1 à 8, caractérisé en ce que plusieurs électrodes à broches (18) mises au potentiel de service sont montées sur le pourtour de la plaque d'extrémité (10), du côté de l'entrée du gaz, dans des alésages (16), en ce que les parcours de déviation (15) mènent dans les alésages (16), et en ce que le gaz afflue à travers les alésages (16) dans la chambre du laser (1), les parois des alésages servant d'électrodes de masse.

12. Dispositif selon l'une des revendications 1 à 9, caractérisé en ce que plusieurs dispositifs de lasers sont interconnectés, avec aspiration du côté aspiration et pression du côté pression.

13. Dispositif selon la revendication 10, caractérisé en ce que l'entraînement de turbines de circulation de tous les dispositifs de lasers s'effectue au moyen d'un moteur (19), par l'intermédiaire d'un arbre (29) s'étendant parallèlement au laser et d'une courroie dentée (21) s'étendant sur l'enveloppe extérieure de la turbine considérée.

**Claims**

1. Laser apparatus on the basis of the axial flow principle comprising a casing enclosing a gas circulation system (4, 5, 6, 7) and an excitation system (13, 14), characterized in that, the laser chamber (1) is formed as a cooled tube and arranged within a circulation turbine (4) concentrically to the longitudinal axis of the circulation turbine.

2. Laser apparatus as claimed in claim 1 wherein the electrodes (13, 14) are arranged in the laser tube (1) or in front of the laser tube (1) in the direction of gas flow.

3. Laser apparatus as claimed in claims 1 or 2 wherein the stator blades (2) or the circulation turbine are fixed to the outside wall of the laser tube (1).

4. Laser apparatus as claimed in any of the claims 1 to 3 wherein the laser tube (1) and the circulation turbine (4) are closed by end plates (9, 10) provided with gas guide means (5).

5. Laser apparatus as claimed in any of the claims 1 to 4 wherein a magnet (6), e.g. annular magnet, is provided for driving the turbine rotor, this magnet being taken along by the rotary field of a motor.

6. Laser apparatus as claimed in any of the claims 1 to 5 wherein the turbine rotor is pivoted inside a cylindrical casing (8) and the casing (8) extends between the end plates (9, 10).

7. Laser apparatus as claimed in any of the claims 1 to 5 wherein the turbine rotor is pivoted in the end plates (9, 10) and the bearing is sealed by means of a sliding seal.

8. Laser apparatus as claimed in claim 7 wherein the sliding seal consists of a magnetic fluid which is introduced into a U-shaped magnet where it is retained.

9. Laser apparatus as claimed in any of the claims 1 to 8 wherein the inside wall of the laser tube (1) consists of an insulating material and one of the electrodes (13) is on earth potential at the gas inlet side and the other one (14) is on operating potential at a certain distance from the first electrode.

10. Laser apparatus as claimed in claim 9 wherein the ratio of the distance between the two electrodes (13, 14) to the total length of the laser tube (1) is such that on the one hand a minimum buring voltage is required and on the other hand the excited gas is completely desactivated after having left the excitation zone in the radiation field of the laser.

11. Laser apparatus as claimed in any of the claims 2 to 8, wherein several pin electrodes (18) which are on operating potential are mounted in bores (16) on the periphery of the end plate (10) at the gas inlet side, the gas guide means (15) lead into the bores (16) and the gas flows into the laser tube (1) through the bores (16), the walls of the bores serving as ground electrodes.

12. Laser apparatus as claimed in any of the claims 2 to 9, wherein several laser devices are connected suction side to suction side and pressure side to pressure side.

13. Laser apparatus as claimed in claim 12, wherein the circulating turbines of all laser devices are driven by one motor (19) via a shaft (20) arranged parallel to the laser axis and via a toothed belt (21) which runs over the outer casing of the respective turbine.

1/2

Fig. 1

Fig. 2

Fig. 3

Fig. 4